# EUROPÄISCHE PATENTSCHRIFT

(11) **EP 1 529 716 B1**
(45) Veröffentlichungstag und Bekanntmachung des Hinweises auf die Patenterteilung: **06.06.2007**
(21) Anmeldenummer: 04023467.6
(22) Anmeldetag: 01.10.2004
(51) Int. Cl.: B62D 5/04

(54) **Fahrzeug-Hilfskraftlenkung mit Elektromotor**
Vehicle power steering with electric motor
Direction assistée pour véhicule à moteur électrique

(30) Priorität: 04.11.2003 DE 10351485
(43) Veröffentlichungstag der Anmeldung: 11.05.2005
(73) Patentinhaber: ZF Lenksysteme GmbH, 73527 Schwäbisch Gmünd (DE)
(72) Erfinder: Heilig, Arnulf, 73529 Schwäbisch Gmünd (DE); Bischofberger, Michael, 73529 Schwäbisch Gmünd (DE); Hiegler, Stephan, 73525 Schwäbisch Gmünd (DE)

(56) Entgegenhaltungen:
- EP-A- 1 138 578
- EP-A- 1 302 385
- US-A1- 2003 019 687
- US-A1- 2003 107 339

## Beschreibung

Die Erfindung betrifft eine Fahrzeug-Hilfskraftlenkung mit Elektromotor nach dem Oberbegriff des Anspruchs 1 sowie ein Verfahren zur Regelung eines Elektromotors einer solchen Fahrzeug-Hilfskraftlenkung nach dem Oberbegriff des nebengeordneten Anspruchs.

Fahrzeug-Hilfskraftlenkung mit Elektromotor werden häufig auch kurz als Elektrolenkungen bezeichnet und sind besonders in Fahrzeugen der unteren Klasse (Kleinwagen) verbreitet. Im zunehmenden Maße werden sie aber auch in Fahrzeugen der Mittel- und Oberklasse eingesetzt. Diese Fahrzeug-Hilfskraftlenkungen, beispielsweise gemäß EP 1138578 A2, haben üblicherweise eine elektronische Regelung, die den Elektromotor dynamisch steuert, so dass dieser zusätzlich zu dem vom Fahrer des Fahrzeuges aufgebrachten Lenkmoment ein lenkkraftunterstützendes Motormoment erzeugt. Die Elektrolenkungen haben gegenüber den hydraulischen Hilfskraftlenkungen, die auch kurz als Hydrauliklenkungen oder Servolenkungen bezeichnet werden, den Vorteil, dass der Elektromotor mittels einer Regelung sehr genau gesteuert werden kann. Die bekannten Regelungen sind zumeist prozessorgesteuerte Schaltungen, die programmierbar sind, so dass die Steuerung des Elektromotors den jeweiligen Anforderungen angepasst und das Verhalten der Elektrolenkung sehr flexibel eingestellt werden kann. Die Übertragung des vom Elektromotor erzeugten lenkkraftunterstützenden Motormoments auf die Lenkmechanik, die eine Zahnstange oder eine Kugelmutterumlauf umfasst, erfolgt üblicherweise über eine getriebliche Verbindung, vorzugsweise über ein Schneckengetriebe. Es hat sich gezeigt, dass die Lenkmechanik einschließlich der getrieblichen Verbindung nicht vollkommen spielfrei ausgeführt werden kann oder zumindest eine Elastizität, etwa beim Schneckenrad, aufweist, die dazu führt, dass in bestimmten Fahrsituationen ein Rattern, also eine mechanisches zumeist höherfrequentes Schwanken, auftreten kann, das unangenehme und störende Geräusche verursacht. Dieser Zustand tritt vor allem dann auf, wenn die Bodenhaftung des Fahrzeug mit der Straße sehr gering ist, also bei Niedrigreibwerten, so wie dies insbesondere bei nassem und gefrorenem Straßenbelag (Glatteis) der Fall ist.

Aus der JP-A-62184967 ist eine Fahrzeug-Hilfskraftlenkung mit Elektromotor bekannt, bei der die elektronische Regelung die Versorgungsspannung (voltage V4) für den Elektromotor vorgibt. Solange kein vom Fahrer das Lenkrad neutral gehalten wird, d.h. das Lenkmoment gleich Null ist, ist auch die Versorgungsspannung auf Null gesetzt, so dass kein Motormoment erzeugt wird. Sobald das Lenkrad in Plusrichtung bewegt wird, d.h. ein positives Lenkmoment vorliegt, wird die Versorgungsspannung erzeugt und zunächst durch eine Verzögerungsschaltung für eine bestimmte Zeitspanne (time T0) auf einem niedrigen Spannungswert (low voltage V0) gehalten, um ein vom Getriebe (reduction gear 9) bewirktes Rattern zu unterdrücken. Diese Maßnahme erfolgt immer und unabhängig von der Fahrsituation, also auch im Normalzustand, wenn die Reibwerte groß genug sind und somit kein Rattern auftritt. Durch die stets vorgesehene Verzögerung wird aber das Verhalten der Lenkung im Normalzustand unnötig verschlechtert.

Aufgabe der Erfindung ist es, eine Fahrzeug-Hilfskraftlenkung mit Elektromotor und eine Verfahren zur Regelung des Elektromotors vorzuschlagen, bei denen die genannten Nachteile nicht auftreten.

Gelöst wird die Aufgabe durch eine Fahrzeug-Hilfskraftlenkung mit den Merkmalen des Anspruchs 1 sowie durch ein Verfahren mit den Merkmalen des nebengeordneten Anspruchs.

Demnach wird vorgeschlagen, dass die Regelung die Rotordrehzahl des Rotors des Elektromotors auswertet und die dynamische Trägheit des Rotors erhöht, falls die Auswertung der Rotordrehzahl einen instabilen Zustand der Regelung anzeigt.

Durch diese Maßnahmen wird erreicht, dass nur dann eine Unterdrückung des Rattern erfolgt, wenn eine kritische Fahrsituation auftritt, in der die Regelung instabil wird. Die vorgeschlagenen Maßnahmen greifen gezielt und direkt in die Motordynamik ein, so dass nur im Bedarfsfall, wenn ein instabiler Zustand eintritt, sofort und schnell das Entstehen von mechanischem Rattern effektiv verhindert wird. Im Normalzustand jedoch zeigt die erfindungsgemäße Lenkung alle ihre Eigenschaften und wird in ihrem dynamischen Verhalten nicht verzögert oder eingeschränkt.

Bevorzugte Ausführungen der Erfindung ergeben sich aus den Unteransprüchen.

Demzufolge ist es vorteilhaft, wenn der Elektromotor ein Asynchronmotor ist und wenn die Regelung im instabilen Zustand die dynamische Trägheit des Rotors mittels einer feldorientierten Steuerung des Asynchronmotors erhöht. Mit dieser Ausgestaltung wird eine sehr effektive Unterbindung des Rattems erreicht.

Auch ist es vorteilhaft, wenn die Regelung die Fahrzeuggeschwindigkeit überwacht und die Rotordrehzahl nur dann auswertet, um den instabilen Zustand zu erkennen, wenn die Fahrgeschwindigkeit einen ersten vorgebbaren Wert nicht überschreitet. Damit wird erreicht, dass eine Rattererkennung nur bei sehr niedrigen Fahrgeschwindigkeiten durchgeführt wird. Diese zusätzlichen Maßnahmen beruhen auf der Erkenntnis, dass nur bei geringer Geschwindigkeiten, von z.B. 25 km/h und weniger, das Rattern und der damit verbundene instabile Zustand der Regelung zuverlässig erkannt werden kann.

Ein weiterer Vorteil ergibt sich, wenn die Regelung die Rotordrehzahl auswertet, indem sie die zeitliche Änderung der Rotordrehzahl überwacht, und wenn die Regelung den instabilen Zustand erkennt, falls die Rotordrehzahl zumindest über einen vorgebbaren Zeitraum hin einer periodisch schwankt, insbesondere mit einer Frequenz schwankt, die innerhalb eines vorgebbaren Bereichs liegt. Hiermit wird eine schnelle und zuverlässige und Erkennung von Rattern mit einfachen Mitteln realisiert.

Vorteilhaft ist es auch, wenn die Regelung die Fahrzeuggeschwindigkeit überwacht und im instabilen Zustand der Regelung die dynamische Trägheit des Rotors nur dann erhöht, wenn die Fahrzeuggeschwindigkeit einen zweiten vorgebbaren Wert nicht überschreitet. Damit wird erreicht, dass nur bei niedrigen Fahrgeschwindigkeiten das dynamische Verhalten der Lenkung etwas eingeschränkt ist, bei höheren Geschwindigkeiten jedoch nicht. Diese zusätzlichen Maßnahmen beruhen auf der Erkenntnis, dass bei höheren Geschwindigkeiten, von z.B. 40 km/h und mehr, das Rattern und die davon erzeugten mechanischen Rückwirkungen und Geräusche im Verhältnis zur Gesamtrückwirkung der Lenkung und dem Gesamtgeräusch im Fahrzeug verhältnismäßig gering sind und vom Fahrer toleriert werden.

Weiterhin ist von Vorteil, wenn die Regelung im stabilen Zustand der Regelung die dynamische Trägheit des Rotors verringert, indem sie die dynamische Steuerung des Elektromotors mit einem ersten Faktor beaufschlagt, der ein positives Vorzeichen hat, und dass die Regelung im instabilen Zustand der Regelung die dynamische Trägheit des Rotors erhöht, indem sie die dynamische Steuerung des Elektromotors mit einem zweiten Faktor beaufschlagt, der kleiner als der erste Faktor ist und/oder der ein negatives Vorzeichen hat. Somit wird erreicht, dass im Normalzustand die Motordynamik erhöht wird, wodurch die Lenkung sehr schnell reagiert. Im instabilen Zustand jedoch wird die Dynamik zurückgeführt, so dass die physikalische Massenträgheit des Rotors nicht durch die Regelung beeinflusst wird oder aber sogar erhöht wird.

In diesem Zusammenhang ist es besonders vorteilhaft, wenn die Regelung die Fahrzeuggeschwindigkeit überwacht und den negativen Faktor mittels einer Kennlinien-Funktion ermittelt, die zumindest von der Fahrzeuggeschwindigkeit, insbesondere von der Fahrzeuggeschwindigkeit, der Rotordrehzahl und einem Vorzeichenwechsel des Lenkmoments, abhängig ist. Durch diese zusätzlichen Maßnahmen wird ein fließender Übergang von instabilen Zustand zurück in den stabilen Zustand erreicht.

Vorzugsweise ist die Regelung ein PD-Regler, der mindestens ein Proportionalglied und mindestens ein Differentialglied aufweist, wobei der PD-Regler den Elektromotor anhand einer durch sein Proportionalglied vorgegebenen Kennlinienfunktion steuert und im instabilen Zustand die Kennlinienfunktion mit einer zeitverzögemden Filterfunktion beaufschlagt. Damit wird eine recht einfach zu realisierende Ausführung vorgeschlagen.

Auch ist es von Vorteil für die Realisierung der Erfindung, wenn die Motorregelung anhand eines Zustandsautomaten durchgeführt wird, der drei Zustände umfasst, wobei der erste Zustand eingenommen wird, um das Erkennen des instabilen Zustandes der Regelung zu aktivieren oder zu deaktivieren, wobei der zweite oder dritte Zustand eingenommen wird, um die Auswertung der Rotordrehzahl zum Erkennen des instabilen Zustandes durchzuführen.

In diesem Zusammenhang ist es besonders vorteilhaft, wenn in dem ersten Zustand die Fahrzeuggeschwindigkeit überwacht wird und wenn zum Erkennen des instabilen Zustandes in den zweiten oder dritten Zustand gewechselt wird, falls die Fahrzeuggeschwindigkeit einen vorgebbaren ersten Wert überschreitet, wobei aus der zeitlichen Änderung der Rotordrehzahl die positive bzw. negative Rotorbeschleunigung ermittelt und mit einem Gradientengrenzwert verglichen wird, wobei in den zweiten Zustand gewechselt wird, falls die positive Rotorbeschleunigung den Gradientengrenzwert überschreitet, und wobei in den dritten Zustand gewechselt wird, falls die negative Rotorbeschleunigung den Gradientengrenzwert überschreitet.

Auch ist es in diesem Zusammenhang besonders vorteilhaft, wenn in dem ersten Zustand die Fahrzeuggeschwindigkeit überwacht wird und das Erkennen des instabilen Zustandes deaktiviert wird, falls die Fahrzeuggeschwindigkeit einen vorgebbaren zweiten Wert überschreitet.

Ebenso ist es für die Realisierung von Vorteil, wenn in dem zweiten Zustand die negative Rotorbeschleunigung mit dem Gradientengrenzwert verglichen wird und geprüft wird, ob dieser Gradientengrenzwert weniger häufig als eine vorgebbaren Anzahl überschritten wird und, falls dies der Fall ist, in den ersten Zustand gewechselt wird, um die Erkennung des instabilen Zustandes zu deaktivieren oder, falls dies nicht der Fall ist, in den dritten Zustand gewechselt wird.

In diesem Zusammenhang ist es besonders vorteilhaft, wenn in dem dritten Zustand die positive Rotorbeschleunigung mit dem Gradientengrenzwert verglichen wird und geprüft wird, ob dieser Gradientengrenzwert weniger häufig als eine vorgebbaren Anzahl überschritten wird und, falls dies der Fall ist, in den ersten Zustand gewechselt wird, um die Erkennung des instabilen Zustandes zu deaktivieren oder, falls dies nicht der Fall ist, in den zweiten Zustand gewechselt wird.

Die Erfindung wird nun näher beschrieben anhand eines Ausführungsbeispiels und anhand der beiliegenden Zeichnung, die folgende schematische Darstellungen wiedergeben:
- Fig. 1: zeigt den Aufbau einer Motorregelung für eine herkömmliche Hilfskraftlenkung, bei der keine Unterdrückung des Ratterns erfolgt;
- Fig. 2: zeigt in drei Teilausschnitten Eingangsmodule für diese Regelung;
- Fig. 3: zeigt den Aufbau eines zur Unterdrückung des Ratterns erfindungsgemäß ausgestalteten Eingangsmoduls für einen PD-Regler;

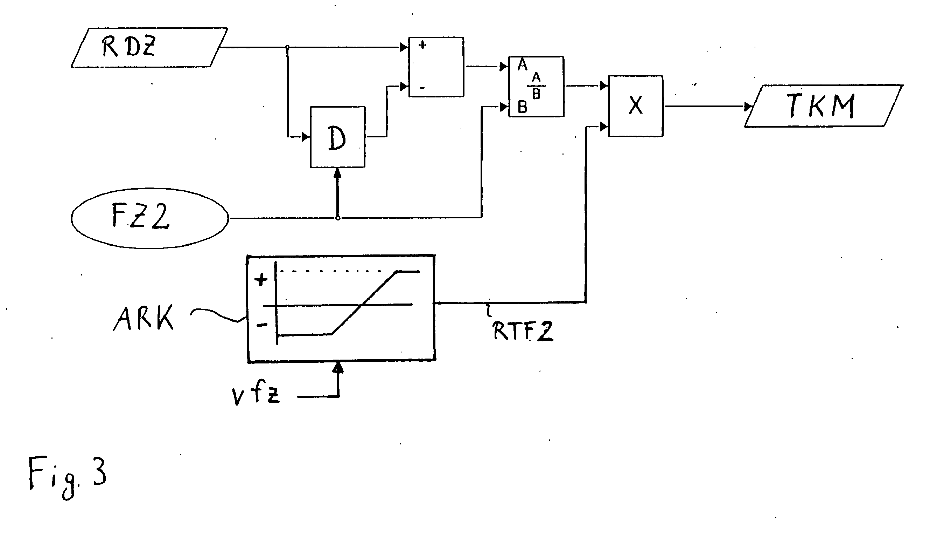

- Fig. 3: zeigt den Aufbau eines erfindungsgemäß ausgestalteten Eingangsmoduls zur Unterdrückung des Ratterns;

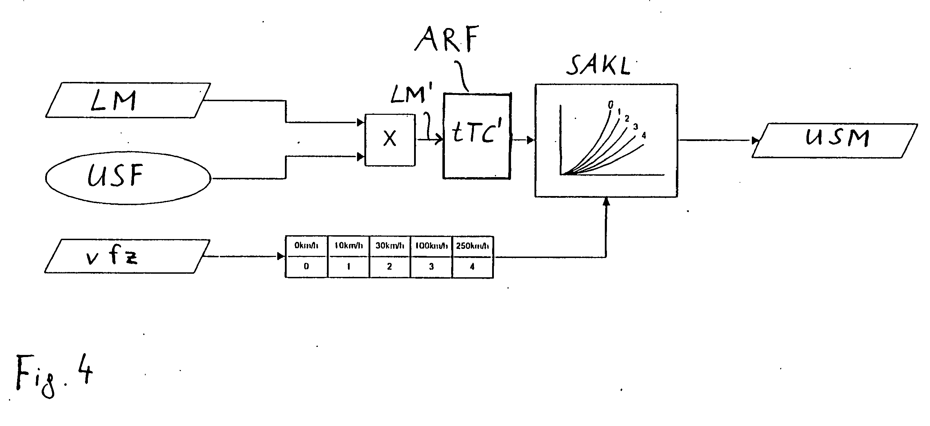

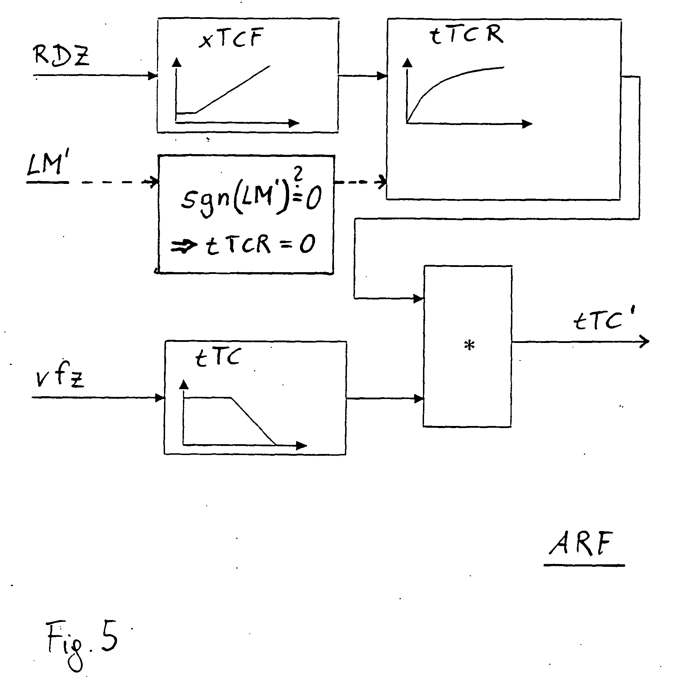

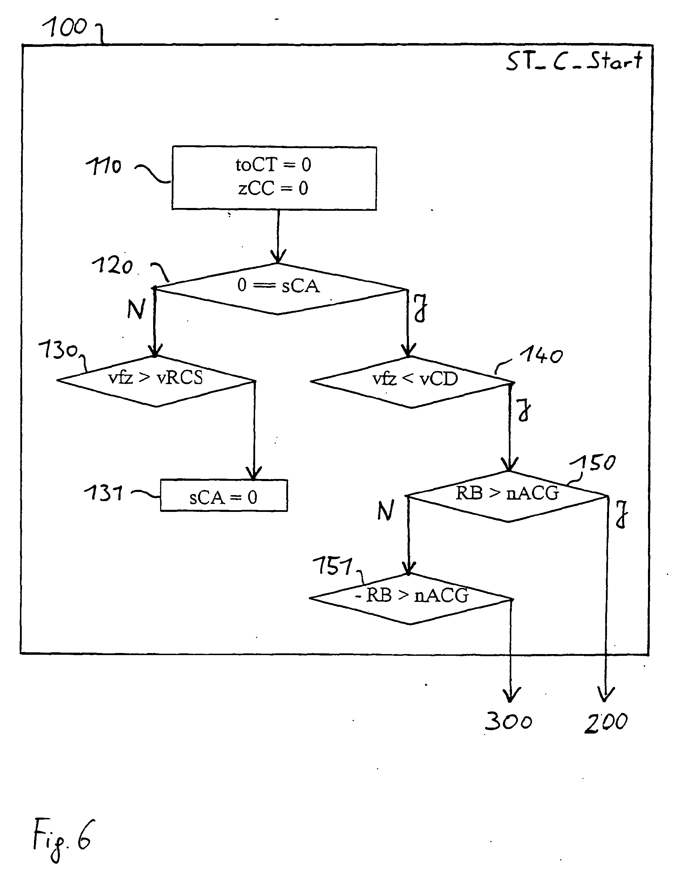

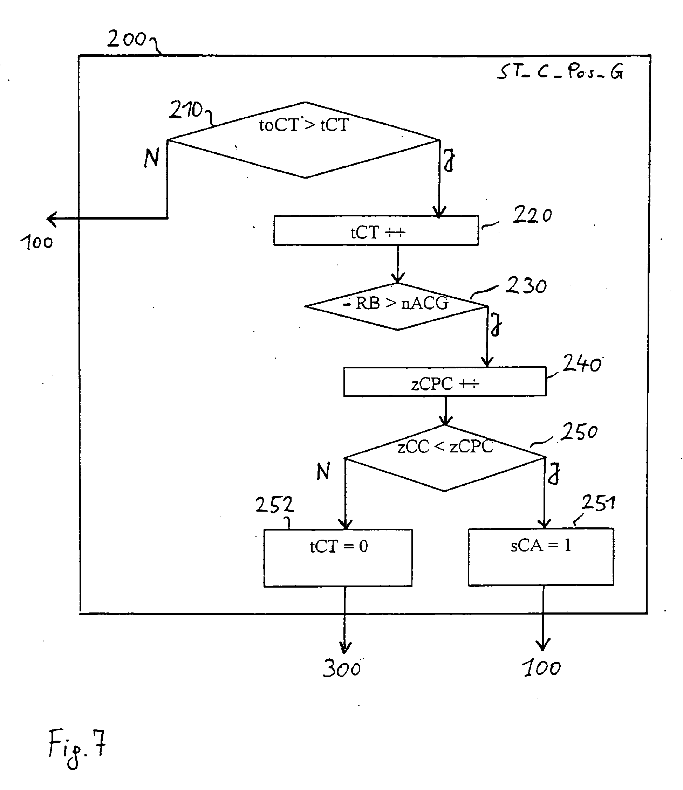

- Fig. 4: zeigt den Aufbau eines erfindungsgemäß zusätzlich mit einem Filter ausgestatteten Eingangsmoduls zur Verbesserung der Unterdrückung des Rattems;

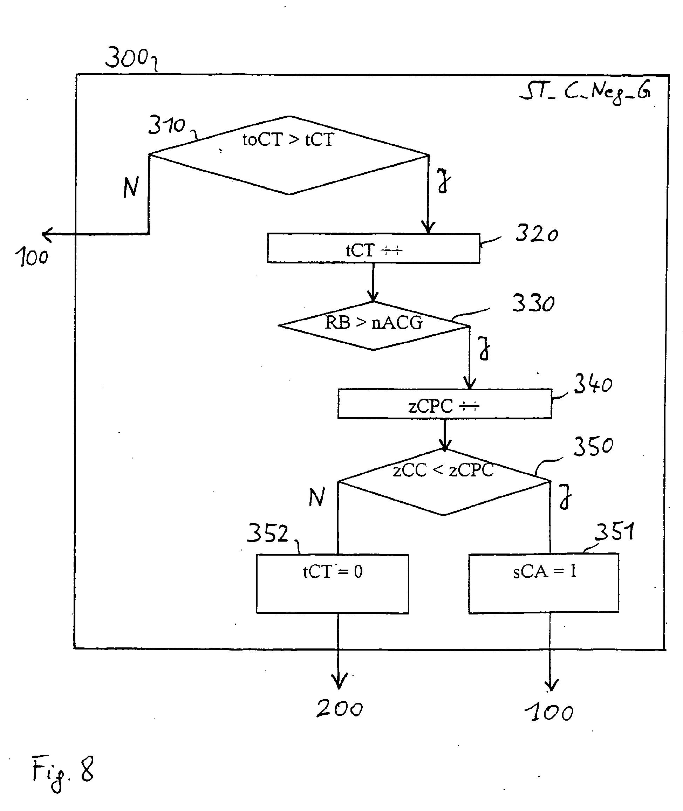

- Fig. 5: zeigt in näheren Details den Aufbau dieses Filters;
- Fig. 6 - 8: zeigen jeweils einen von drei Zuständen für einen in die erfindungsgemäße Regelung eingebundenen Zustandautomaten.

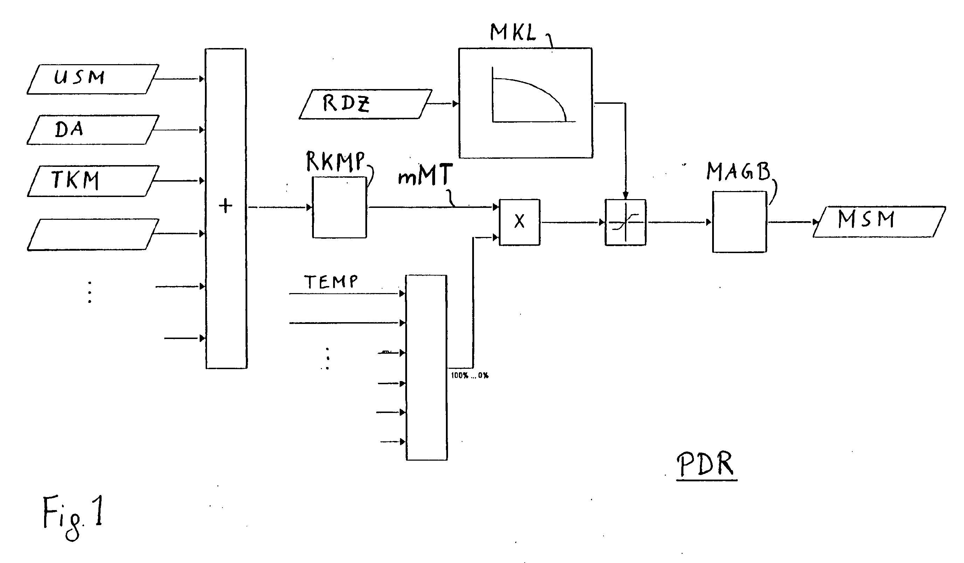

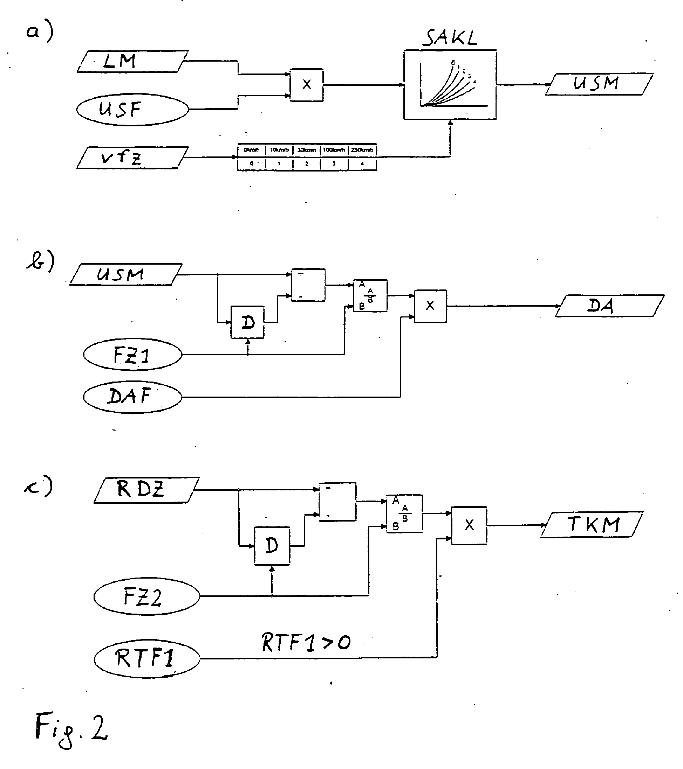

Die Fig.1 zeigt eine Regelung PDR nach einem herkömmlichen Schaltungsentwurf. Diese Regelung ist als PD-Regler ausgeführt und dient zur Ansteuerung eines Elektromotors in einer Hilfskraftlenkung. Aus verschiedenen Eingangsdaten oder Signalen wird ein Motormoment MSM (Motor-Sollmomnent) berechnet, welches der Elektromotor zur Unterstützung der.manuellen Lenkkraft erzeugen soll. Die Eingangsgrößen für die dargestellte Schaltung sind u.a. ein Unterstützungsmoment USM, welches den proportional Anteil der gezeigten Regelung repräsentiert, sowie ein Signal DA, welches einem erstern Differentialanteil entspricht. Außerdem wird als Eingangsgröße noch ein weiterer Differentialanteil TKM eingespeist, welcher ein Trägheitskompensationsmoment repräsentiert. Weitere Eingangsgrößen sollen hier nicht näher betrachtet werden. Die Signale USM, DA und TKM werden von Eingangsmodulen ermittelt, welche nachfolgend noch anhand der Fig. 2 näher beschrieben werden.

Alle genannten Eingangsgrößen (USM, DA, und TKM) werden aufsummiert und anschließend einer Berechnungsstufe RKMP zur Berechnung der Reibungskompensation zugeführt. Diese Stufe berechnet daraus ein Motordrehmoment mMT. Das Motormoment wird mit einem Wichtungsfaktor, der zwischen 0 und 100 % liegt, multipliziert. Zur Berechnung des Wichtungsfaktors werden verschiedene Eingangsgrößen, wie etwa Temperaturgrößen TEMP, Spannungsgrößen und andere Parameter herangezogen. Das gewichtete Motormoment wird anschließend einer Differenzierstufe zugeführt. Die Differenzierung erfolgt in Abhängigkeit von der aktuellen Rotordrehzahl RDZ, wobei die Rotordrehzahl anhand einer Motorkennlinie MKL gefiltert wird. Das auf diese Weise differenzierte Motordrehmoment mMT entspricht dem aktuellen Momentenanstiegsgradienten. Dieser wird anschließend in einer Stufe MAGB begrenzt, so dass man als Ausgangswert die Sollgröße, nämlich das gewünschte Motormoment MSM, erhält.

Diese Sollgröße MSM wird einer (nicht dargestellten) Elektromotorsteuerung zugeführt, die vorzugsweise eine feldorientierte Motorsteuerung ist. Somit kann der Elektromotor abhängig von den verschiedenen Betriebsgrößen optimal gesteuert werden.

In der Fig. 2, bestehend aus drei Teilen 2a, 2b und 2c, sind nun die einzelnen Eingangsmodule dargestellt, die die Eingangsgrößen für die zuvor beschriebene Regelung liefern.

Die Fig. 2a zeigt ein Eingangsmodul, welches das Unterstützungsmoment USM berechnet, anhand von dem auftretenden Lenkmoment LM sowie der momentanen Fahrzeuggeschwindigkeit vfz. Zunächst wird das vorzugsweise über einen Drehstab und Drehmomentensensor ermittelte Lenkmoment LM mit einem sogenannten Unterstützungsfaktor USF multipliziert, welcher zwischen 0 und 150 % liegen kann. Das somit gewichtete Lenkmoment wird anschließend anhand einer Kennlinienschar SAKL zu dem gesuchten Unterstützungsmoment USM überführt. Die Kennlinienschar repräsentiert eine Gruppe von Funktionsverläufen, die das Verhältnis zwischen Unterstützungsmoment und Lenkmoment wiedergeben. In Abhängigkeit von der gemessenen Fahrzeuggeschwindigkeit vfz wird nun eine dieser Kennlinien ausgewählt. Bei niedrigen Geschwindigkeiten verläuft die Kennlinie steiler als bei hohen Geschwindigkeiten. Demnach wird bei niedrigen Geschwindigkeiten ein höheres Unterstützungsmoment berechnet als bei hohen Geschwindigkeiten. Diese geschwindigkeitsabhängige Berechnung erleichtert u.a. das Verhalten der Lenkung bei der Parkierung des Fahrzeuges.

Als zweites Eingangsmodul zeigt die Figur 2b eine Schaltung zur Berechnung des ersten Differentialanteils DA. Dieser berechnet sich aus den Eingangsgrößen USM, also dem zuvor berechneten Unterstützungsmoment, sowie aus zwei vorgebbaren Faktoren, nämlich einem ersten Faktor FZ1, der die Filterzeit für ein Verzögerungsglied D angibt, und aus einem bestimmbaren D-Anteilsfaktor DAF, der beispielsweise zwischen 0 und 20 Millisekunden betragen kann. Zunächst wird das Unterstützungsmoment USM einem Vergleicher und parallel dazu einem Verzögerungsglied D zugeführt, so dass das aktuelle Signal USM verglichen wird mit demselben, aber verzögerten, Signal. Demzufolge wird eine Differenzierung des Unterstützungsmomentes USM durchgeführt. Die Verzögerung ist abhängig von der zuvor gewählten Filterzeit, die der erste Faktor FZ1 angibt und welche zwischen einer und acht Millisekunden liegen kann.

Das Ausgangssignal des Vergleichers wird in das Verhältnis zu der Filterzeit FZ1 gesetzt. Durch diese Quotientenbildung ergibt sich ein Signal welches anschließend multipliziert wird mit dem vorgegebenen D-Anteilsfaktor DAF. Daraus ergibt sich schließlich der gewünschte D-Anteil DA.

Als drittes Eingangsmodul zeigt die Fig. 2c eine Schaltung zur Ermittlung des Trägheitskompensationsmomentes TKM. Diese Schaltung ist prinzipiell gleich aufgebaut wie die zuvor in der Fig. 2b beschriebene Schaltung. Jedoch werden hier als Eingangsgrößen die Rotordrehzahl RDZ sowie ein zweiter Faktor FZ2 und ein Rotorträgheitsfaktor RTF1 miteinander verknüpft. Die Rotordrehzahl wird differenziert in Abhängigkeit von FZ2 und anschließend dividiert durch diesen Faktor FZ2, um danach mit dem Faktor RTF1 multipliziert zu werden. Daraus ergibt sich dann das gewünschte Trägkeitskompensationsmoment.

Alle drei anhand der in Fig. 2 gezeigten Schaltungen berechneten Größen USM, DA und TKM bilden die zuvor genannten Eingangsgrößen für die in der Fig.1 dargestellte Regelschaltung PDR.

Die hier anhand der Fig. 1 und 2 dargestellte Schaltung ist zunächst noch nicht in der Lage, eventuell auftretendes Rattem, d.h. störende Effekte innerhalb eines instabilen Zustandes, zu kompensieren oder wohl möglich vollkommen zu unterbinden. Dazu ist jedoch eine solche erfindungsgemäß ausgeführte Schaltung in der Lage wie sie beispielsweise in der Fig. 3 dargestellt ist.

Der Erfindungsgedanke geht von der Erkenntnis aus, dass im Falle eines instabilen Zustandes, das störende Rattem ausgeschaltet werden kann, indem in diesem Fall die dynamische Trägheit des Rotors erhöht wird. Das wird vorzugsweise dadurch erreicht, dass das Trägheitskompensationsmoment (vgl. Fig. 2c), welches üblicherweise positiv ist (RTF1>0), deutlich reduziert wird oder sogar ein negatives Vorzeichen erhält.

Mit anderen Worten: Es wird nicht -so, wie es im Normalzustand üblich ist- ein Trägheitskompensationsmoment TKM berechnet, das deutlich im positiven Bereich liegt, sondern es wird nun erfindungsgemäß (s. Fig. 3) ein Trägheitskompensationsmoment TKM berechnet, das deutlich kleiner ist bis hin zum Wert Null, oder das sogar ein negatives Vorzeichen haben kann.

Wie anhand der Fig. 3 verdeutlicht wird, ist dazu beispielsweise das Eingangsmodul aus der Fig. 2c so verändert, dass nun ein Rotorträgheitsfaktor RTF2 mit negativen Vorzeichen oder zumindest mit einem sehr geringen Wert berechnet wird. Dies geschieht anhand einer Kennlinienfunktion ARK, welche in Abhängigkeit der Fahrzeuggeschwindigkeit vfz einen negativen oder nur gering positiven Faktor vorgibt. Im unteren Geschwindigkeitsbereich von beispielsweise 0 bis 10 km/h wird ein negativer Faktor vorgegeben, der betragsmäßig dem üblichen Faktor RTF1 entspricht, aber der nun ein negatives Vorzeichen hat. Daraus resultiert im niedrigen Geschwindigkeitsbereich eine Gegenkompensation mit zweifachem Gewicht, d.h. das Trägheitskompensationsmoment ist um den Faktor zwei ins Negative hinein kompensiert worden.

Das hat zur Konsequenz, dass der Elektromotor träger gemacht wird, als er es normalerweise ist. Erhöht sich die Fahrzeuggeschwindigkeit von z.B. 10 km/h auf 20 km/h so wird die Kompensation anhand der Kennlinie ARK linear erhöht. Erreicht der Faktor RTF2 den Wert Null, so liegt keine Kompensation vor und der Elektromotor verhält sich entsprechend seiner physikalisch gegebenen Trägheit. Im weiteren Anstieg der Kennlinie wird der Faktor RTF2 positiv, so dass das Trägheitskompensationsmoment ebenfalls positiv wird. Das bedeutet, dass nun die gegebene Trägheit des Elektromotors aufgefangen, also reduziert wird. Bei Geschwindigkeiten von z.B. 20 km/h und mehr stellt sich schließlich ein positiver Wert RTF2 ein, der den üblichen Faktor RTF1 (s. Fig. 2c) entspricht. In diesem Zustand ist die normal übliche Trägheitskompensation wieder eingestellt.

Es wird also erfindungsgemäß bei Auftreten von Instabilitäten und Rattern eine Gegenkompensation durchgeführt, die die Massenträgheit des Rotors zumindest für geringe Geschwindigkeiten erhöht. Im Normalzustand wird die Trägheit des Rotors erniedrigt. Dazwischen findet ein sanfter anhand einer vorzugsweise linearen Kennlinie vorgegebener Übergang statt.

Zusätzlich zu diesen Maßnahmen kann noch das von dem Regler erfaßte Lenkmoment gefiltert werden, um somit die Berechnung des Unterstützungsmomentes USM zu dämpfen. Dies wird anhand der Fig. 4 verdeutlicht, die eine Modifikation des ersten Eingangsmodules (vgl. Fig. 2a) wiedergibt:

Erfindungsgemäß wurde nun zwischen der Multiplikationsstufe und der Kennlinienfunktion SAKL ein Zeit verzögerndes Filter ARF geschaltet, welches das erfasste und gewichtete Lenkmoment LM' sowie weitere Größen überwacht, um daraus eine Verzögerungszeit tTC' zu berechnen, mit der die anschließende Filterfunktion SAKL beaufschlagt wird.

Die Funktion des zeitverzögemden Filters ARF wird nun anhand der Fig. 5 näher beschrieben: Als Eingangsgrößen dienen die Rotordrehzahl RDZ sowie die Fahrzeuggeschwindigkeit vfz und optional das erfasste Lenkmoment LM'. Die Rotordrehzahl wird mittels einer ersten im wesentlichen linear ansteigenden Kennlinie und anschließend einer zweiten im wesentlichen positiv gegen einen asymptotischen Grenzwert ansteigenden Kennlinie überführt und auf einen Multiplikator gegeben. Als zweite Eingangsgröße dient die Fahrzeuggeschwindigkeit vfz, welche über eine Kennlinie mit im wesentlichen degressiven Verlauf dem Multiplikator zugeführt wird. Das Produkt der Multiplikation ergibt die gesuchte Verzögerungszeit tTC'. Diese repräsentiert eine Zeitkonstante mit der die anschließende Filterfunktion SAKL (s. Fig. 4) im Falle eines instabilen Zustandes beaufschlagt wird, um die Berechnung des Unterstützungsmomentes USM zeitlich etwas zu verzögern. Somit wird auch durch diese Maßnahme das Verhalten der Regelung insgesamt verlangsamt und die Dynamik weiter reduziert, was wiederum dem Rattern entgegen wirkt.

Diese Maßnahme kann nun noch weiter verbessert werden, indem auch noch das erfaßte Lenkmoment LM' (s. Fig. 5) überwacht wird und bei einem Vorzeichenwechsel das Ergebnis auf Null gesetzt wird. Dies geschieht hier beispielsweise dadurch, dass eine der Kennlinienfunktionen, hier die Funktion tTCR, auf Null zurück gesetzt wird. Daraus ergibt sich bei einem Vorzeichenwechsel des Lenkmomentes eine Zeitkonstante tTC' mit dem Wert Null. Somit ist im Falle eines am Handrad auftretenden Lastwechsels jede zeitverzögemde Regelung ausgeschlossen.

Die beschriebene Regelung arbeitet nach einem erfindungsgemäßen Verfahren, das vorzugsweise einen Zustandsautomaten (state machine) umfasst. In den Fig. 6, 7 und 8 ist jeweils einer von drei möglichen Zuständen dargestellt, welche der Automat einnehmen kann. Die Fig. 6 zeigt den ersten Zustand 100, welcher sogleich die Ausgangslage des Reglerverhaltens wiedergibt. In diesem Zustand 100 wird im wesentlichen eine Aktivierung oder Deaktivierung von Gegenmaßnahmen gegen das auftretende Rattems durchgeführt. Dazu werden in einem ersten Block 110 zwei Parameter toCT und zCC auf Null gesetzt. Anschließend wird überprüft ob ein Parameter SCA, der entweder logisch 0 oder 1 sein kann, auf 0 gesetzt. Ist dies nicht der Fall, so wird ein Rattem festgestellt und es werden Gegenmaßnahmen aktiviert. Dazu wird in einem Block 130 die momentane Fahrzeuggeschwindigkeit vfz mit einem Vergleichswert vRCS verglichen.

Ist die Geschwindigkeit vfz geringer als der Vergleichswert, so bleiben die Gegenmaßnahmen aktiv, also bleibt sCA=1. Andernfalls wird in einem Block 131 der Parameter sCA auf Null gesetzt, was dann zu einer Deaktivierung der Gegenmaßnahmen führt.

Hat die Überprüfung im Block 120 jedoch ergeben, dass der Parameter sCA gleich Null ist, so wird in einem Block 140 die aktuelle Geschwindigkeit vfz mit einem anderen Grenzwert vCD verglichen. Ist die Geschwindigkeit geringer als dieser Wert, so wird anschließend in einem Block 150 die Rotorbeschleunigung, d.h. der Gradient der überwachten Rotordrehzahl (vgl. Fig. 3 RDZ), ermittelt und mit einem ersten Grenzwert nACG verglichen. Überschreitet die positive Rotorbeschleunigung RB diesen Grenzwert, so wird in den zweiten Zustand 200 gewechselt. Andernfalls folgt ein Block 151, in welchem die negative Rotorbeschleunigung -RB mit diesem Grenzwert verglichen wird. Falls die negative Rotorbeschleunigung -RB größer als dieser Grenzwert ist, wird in den dritten Zustand 300 gewechselt.

Der zweite Zustand wird anhand der Fig. 7 näher beschrieben: Er beschreibt die Rattererkennung anhand des positiven Gradienten der Rotordrehzahl, also der positiven Rotorbeschleunigung. Im wesentlichen wird anhand einer Zählvariablen zCPC ermittelt, ob der Gradient mehrmals hintereinander folgend auftritt, so dass auf eine periodische Schwankung der Rotordrehzahl geschlossen werden kann, welche typisch für den instabilen Zustand ist.

Gegebenenfalls wird auch ausgehend vom Zustand 200 in den dritten Zustand 300 gewechselt, der anhand der Fig. 8 dargestellt ist: Dort wird im wesentlichen anhand des negativen Gradientens eine periodische Rotordrehzahlschwankung festgestellt.

Solange also eine periodische Schwankung der Rotordrehzahl vorliegt, geht das beschriebene Verfahren und die beschriebene Regelschaltung davon aus, dass ein Rattern vorliegt und demnach Gegenmaßnahmen ergriffen werden müssen. Wie zuvor schon beschrieben werden die Gegenmaßnahmen jedoch in Abhängigkeit der, Fahrzeuggeschwindigkeit getroffen.

Insbesondere wird unterhalb einer vorgebbaren Mindestgeschwindigkeit vCD, die beispielsweise 25 km/h beträgt, keine Rattererkennung durchgeführt (s. Fig. 6, Block 140). Auch wird bei einer Überschreitung einer vorgebbaren Höchstgeschwindigkeit vRCS, die z.B. 40 km/h betragen kann, die Gegenmaßnahme unterbrochen (s. Block 130). Schließlich spielt die ermittelte Fahrzeuggeschwindigkeit noch eine wichtige Rolle während der Durchführung der Gegenmaßnahmen (s. Fig. 3, Kennlinienfunktion ARK in Abhängigkeit der Geschwindigkeit vfZ).

Wie anhand der Figuren beschrieben wurde, umfasst die Erfindung sehr konkrete und exakt aufeinander abgestimmte Maßnahmen. Das Grundprinzip der Erfindung jedoch kann auch durch verschiedene weiter Ausführungsformen realisiert werden. Im wesentlichen zielen die erfindungsgemäßen Maßnahmen darauf ab, die Rotorträgheit im Falle eines instabilen Zustandes deutlich zu erhöhen und somit das Rattern zu eliminieren, wodurch der Fahrkomfort deutlich verbessert wird.

## Patentansprüche

1. Fahrzeug-Hilfskraftlenkung mit Elektromotor und mit einer elektronischen Regelung (PDR), die den Elektromotor dynamisch steuert, so dass dieser zusätzlich zu dem vom Fahrer des Fahrzeuges aufgebrachten Lenkmoment (LM) ein lenkkraftunterstützendes Motormoment (MSM) erzeugt,
**dadurch gekennzeichnet, dass**
die Regelung (PDR) die Rotordrehzahl (RDZ) des Rotors des Elektromotors auswertet und die dynamische Trägheit des Rotors erhöht, falls die Auswertung der Rotordrehzahl (RDZ) einen instabilen Zustand der Regelung anzeigt.

2. Fahrzeug-Hilfskraftlenkung nach Anspruch 1, **dadurch gekennzeichnet, dass** der Elektromotor ein Asynchronmotor ist und dass die Regelung (PDR) im instabilen Zustand die dynamische Trägheit des Rotors mittels einer feldorientierten Steuerung des Asynchronmotors erhöht.

3. Fahrzeug-Hilfskraftlenkung nach Anspruch 1, **dadurch gekennzeichnet, dass** die Regelung (PDR) die Fahrzeuggeschwindigkeit (vfz) überwacht und die Rotordrehzahl (RDZ) nur dann auswertet, um den instabilen Zustand zu erkennen, wenn die Fahrgeschwindigkeit einen ersten vorgebbaren Wert (vCD) nicht überschreitet.

4. Fahrzeug-Hilfskraftlenkung nach Anspruch 1, **dadurch gekennzeichnet, dass** die Regelung (PDR) die Rotordrehzahl (RDZ) auswertet, indem sie die zeitliche Änderung der Rotordrehzahl überwacht, und dass die Regelung (PDR) den instabilen Zustand erkennt, falls die Rotordrehzahl (RDZ) zumindest über einen vorgebbaren Zeitraum hin einer periodisch schwankt, insbesondere mit einer Frequenz schwankt, die innerhalb eines vorgebbaren Bereichs liegt

5. Fahrzeug-Hilfskraftlenkung nach Anspruch 1, **dadurch gekennzeichnet, dass** die Regelung (PDR) die Fahrzeuggeschwindigkeit (vfz) überwacht und im instabilen Zustand der Regelung die dynamische Trägheit des Rotors nur dann erhöht, wenn die Fahrzeuggeschwindigkeit (vfz) einen zweiten vorgebbaren Wert (vRCS) nicht überschreitet.

6. Fahrzeug-Hilfskraftlenkung nach Anspruch 1, **dadurch gekennzeichnet, dass** die Regelung (PDR) im stabilen Zustand der Regelung die dynamische Trägheit des Rotors verringert, indem sie die dynamische Steuerung des Elektromotors mit einem ersten Faktor (RTF1) beaufschlagt, der ein positives Vorzeichen hat, und dass die Regelung (PDR) im instabilen Zustand der Regelung die dynamische Trägheit des Rotors erhöht, indem sie die dynamische Steuerung des Elektromotors mit einem zweiten Faktor (RTF2) beaufschlagt, der kleiner als der erste Faktor (RTF1) ist und/oder der ein negatives Vorzeichen hat.

7. Fahrzeug-Hilfskraftlenkung nach Anspruch 6, **dadurch gekennzeichnet, dass** die Regelung (PDR) die Fahrzeuggeschwindigkeit (vfz) überwacht und den negativen Faktor (RTF2) mittels einer Kennlinien-Funktion (ARK) ermittelt, die zumindest von der Fahrzeuggeschwindigkeit (vfz), insbesondere von der Fahrzeuggeschwindigkeit (vfz), der Rotordrehzahl (RDZ) und einem Vorzeichenwechsel des Lenkmoments (LM), abhängig ist.

8. Fahrzeug-Hilfskraftlenkung nach Anspruch 1, **dadurch gekennzeichnet, dass** die Regelung ein PD-Regler (PDR) ist, der mindestens ein Proportionalglied und mindestens ein Differentialglied aufweist, dass der PD-Regler (PDR) den Elektromotor anhand einer durch sein Proportionalglied vorgegebenen Kennlinienfunktion (SAKL) steuert und dass der PD-Regler (PDR) im instabilen Zustand die Kennlinienfunktion (SAKL) mit einer zeitverzögernden Filterfunktion (ARF) beaufschlagt.

9. Verfahren zur Regelung eines Elektromotors in einer Fahrzeug-Hilfskraftlenkung, bei dem der Elektromotor dynamisch gesteuert wird, so dass dieser zusätzlich zu dem vom Fahrer des Fahrzeuges aufgebrachten Lenkmoment (LM) ein lenkkraftunterstützendes Motormoment (MSM) erzeugt,
**dadurch gekennzeichnet, dass**
die Rotordrehzahl (RDZ) des Rotors des Elektromotors auswertet wird
und dass die dynamische Trägheit des Rotors erhöht wird, falls die Auswertung der Rotordrehzahl (RDZ) einen instabilen Zustand der Regelung anzeigt.

10. Verfahren nach Anspruch 9, **dadurch gekennzeichnet, dass**
das Verfahren anhand eines Zustandsautomaten durchgeführt wird, der drei Zustände (100, 200, 300) umfasst, wobei der erste Zustand (100) eingenommen wird, um das Erkennen des instabilen Zustandes der Regelung zu aktivieren oder zu deaktivieren, wobei der zweite oder dritte Zustand (200; 300) eingenommen wird, um die Auswertung der Rotordrehzahl (RDZ) zum Erkennen des instabilen Zustandes durchzuführen.

11. Verfahren nach Anspruch 10, **dadurch gekennzeichnet, dass**
in dem ersten Zustand (100) die Fahrzeuggeschwindigkeit (vfz) überwacht wird und dass zum Erkennen des instabilen Zustandes in den zweiten oder dritten Zustand (200; 300) gewechselt wird, falls die Fahrzeuggeschwindigkeit (vfz) einen vorgebbaren ersten Wert (vCD) überschreitet, wobei aus der zeitlichen Änderung der Rotordrehzahl die positive bzw. negative Rotorbeschleunigung (RB; - RB) ermittelt und mit einem Gradientengrenzwert (nACG) verglichen wird, wobei in den zweiten Zustand (200) gewechselt wird, falls die positive Rotorbeschleunigung (RB) den Gradientengrenzwert (nACG) überschreitet, und wobei in den dritten Zustand (300) gewechselt wird, falls die negative Rotorbeschleunigung (- RB) den Gradientengrenzwert (nACG) überschreitet.

12. Verfahren nach Anspruch 10, **dadurch gekennzeichnet, dass**
in dem ersten Zustand (100) die Fahrzeuggeschwindigkeit (vfz) überwacht wird und das Erkennen des instabilen Zustandes deaktiviert wird (sCA=0), falls die Fahrzeuggeschwindigkeit (vfz) einen vorgebbaren zweiten Wert (vRCS) überschreitet.

13. Verfahren nach Anspruch 11, **dadurch gekennzeichnet, dass**
in dem zweiten Zustand (200) die negative Rotorbeschleunigung (-RB) mit dem Gradientengrenzwert (nAVG) verglichen wird und geprüft wird, ob dieser Gradientengrenzwert (nAVG) weniger häufig als eine vorgebbaren Anzahl (zCPC) überschritten wird und, falls dies der Fall ist, in den ersten Zustand (100) gewechselt wird, um die Erkennung des instabilen Zustandes zu deaktivieren (sCA = 1) oder, falls dies nicht der Fall ist, in den dritten Zustand (300) gewechselt wird.

14. Verfahren nach Anspruch 11, **dadurch gekennzeichnet, dass**
in dem dritten Zustand (300) die positive Rotorbeschleunigung (RB) mit dem Gradientengrenzwert (nAVG) verglichen wird und geprüft wird, ob dieser Gradientengrenzwert (nAVG) weniger häufig als eine vorgebbaren Anzahl (zCPC) überschritten wird und, falls dies der Fall ist, in den ersten Zustand (100) gewechselt wird, um die Erkennung des instabilen Zustandes zu deaktivieren (sCA = 1) oder, falls dies nicht der Fall ist, in den zweiten Zustand (200) gewechselt wird.

## Claims

1. Vehicle auxiliary power steering with an electric motor with electronic closed-loop control (PDR), which dynamically controls the electric motor such that, in addition to the steering torque (LM) which is applied by the driver of the vehicle, it produces a motor torque (MSN) which assists the steering power,
**characterized in that**
the closed-loop control (PDR) evaluates the rotor rotation speed (RDZ) of the rotor of the electric motor and increases the dynamic inertia of the rotor if the evaluation of the rotor rotation speed (RDZ) indicates that the closed-loop control is in an unstable state.

2. Vehicle auxiliary power steering according to Claim 1, **characterized in that** the electric motor is an asynchronous motor, and **in that** the closed-loop control (PDR) increases the dynamic inertia of the rotor by means of field-oriented open-loop control of the asynchronous motor when the closed-loop control (PDR) is in the unstable state.

3. Vehicle auxiliary power steering according to Claim 1, **characterized in that** the closed-loop control (PDR) monitors the vehicle speed (vfz) and evaluates the rotor rotation speed (RDZ) in order to identify the unstable state only when the speed of travel does not exceed a first predeterminable value (vCD).

4. Vehicle auxiliary power steering according to Claim 1, **characterized in that** the closed-loop control (PDR) evaluates the rotor rotation speed (RDZ) by monitoring the rate of change of the rotor rotation speed, and **in that** the closed-loop control (PDR) identifies the unstable state if the rotor rotation speed (RDZ) fluctuates periodically at least over a predeterminable time period, and in particular fluctuates at a frequency which is within a predeterminable range.

5. Vehicle auxiliary power steering according to Claim 1, **characterized in that** the closed-loop control (PDR) monitors the vehicle speed (vfz) and, when the closed-loop control is in the unstable state, increases the dynamic inertia of the rotor only if the vehicle speed (vfz) does not exceed a second predeterminable value (vRCS).

6. Vehicle auxiliary power steering according to Claim 1, **characterized in that**, when the closed-loop control (PDR) is in the unstable state, it reduces the dynamic inertia of the rotor by applying a first factor (RTF1), which has a positive mathematical sign, to the dynamic open-loop control of the electric motor, and **in that**, when the closed-loop control (PDR) is in the unstable state, it increases the dynamic inertia of the rotor by applying a second factor (RTF2), which is less than the first factor (RFT1) and/or has a negative mathematical sign, to the dynamic open-loop control of the electric motor.

7. Vehicle auxiliary power steering according to Claim 6, **characterized in that** the closed-loop control loop (PDR) monitors the vehicle speed (vfz) and determines the negative factor (RTF2) by means of a characteristic function (ARK) which is dependent at least on the vehicle speed (vfz), in particular on the vehicle speed (vfz), on the rotor rotation speed (RDZ) and on a change in the mathematical sign of the steering torque (LM).

8. Vehicle auxiliary power steering according to Claim 1, **characterized in that** the closed-loop control is a PDR-regulator (PDR) which has at least one proportional element and at least one differential element, **in that** the PD regulator (PDR) provides open-loop control for the electric motor on the basis of a characteristic function (SAKL) which is predetermined by its proportional element, and **in that**, in the unstable state, the PD regulator (PDR) applies a time-delayed filter function (ARF) to the characteristic function (SAKL).

9. Method for closed-loop control of an electric motor for vehicle auxiliary power steering, in which the electric motor is subject to open-loop dynamic control such that, in addition to the steering torque (LM) which is applied by the driver of the vehicle, it produces a motor torque (MSM) which assists the steering power,
**characterized in that**
the rotor rotation speed (RDZ) of the rotor of the electric motor is evaluated and **in that** the dynamic inertia of the rotor is increased if the evaluation of the rotor rotation speed (RDZ) indicates that the closed-loop control is in an unstable state.

10. Method according to Claim 9, **characterized in that** the method is carried out on the basis of an automatic state device, which comprises three states (100, 200, 300), with the first state (100) being assumed in order to activate or to deactivate the identification of the unstable state of the closed-loop control, with the second or third state (200; 300) being assumed in order to carry out the evaluation of the rotor rotation speed (RDZ) in order to identify the unstable state.

11. Method according to Claim 10, **characterized in that** the vehicle speed (vfz) is monitored in the first state (100), and **in that** a change is made to the second or third state (200; 300) in order to identify the unstable state if the vehicle speed (vfz) exceeds a predeterminable first value (vCD), with positive or negative rotor acceleration (RB; - RB) being determined from the rate of change of the rotor rotation speed and being compared with a gradient limit value (nACG), with a change being made to the second state (200) if the positive rotor acceleration (RB) exceeds the gradient limit value (nACG), and with a change being made to the third state (300) if the negative rotor acceleration (-RB) exceeds the gradient limit value (nACG).

12. Method according to Claim 10, **characterized in that** the vehicle speed (vfz) is monitored in the first state (100) and the identification of the unstable state is deactivated (sCA=0) if the vehicle speed (vfz) exceeds a predeterminable second value (vRCS).

13. Method according to Claim 11, **characterized in that**, in the second state (200), the negative rotor acceleration (-RB) is compared with the gradient limit value (nAVG), and a check is carried out to determine whether this gradient limit value (nAVG) is exceeded less frequently than a predeterminable figure (zCPC) and, if this is the case, a change is made to the first state (100) in order to deactivate the identification of the unstable state (sCA = 1) or, if this is not the case, a change is made to the third state (300).

14. Method according to Claim 11, **characterized in that**, in the third state (300), the positive rotor acceleration (RB) is compared with the gradient limit value (nAVG), and a check is carried out to determine whether this gradient limit value (nAVG) is exceeded less frequently than a predeterminable figure (zCPC) and, if this is the case, a change is made to the first state (100) in order to deactivate the identification of the unstable state (sCA = 1) or, if this is not the case, the change is made to the second state (200).

## Revendications

1. Direction assistée pour véhicule comprenant un moteur électrique et un régulateur électronique (PDR) qui commande dynamiquement le moteur électrique de manière à ce que celui-ci produise un couple moteur (MSM) d'assistance à la force de changement de direction en plus du couple de direction (LM) appliqué par le conducteur du véhicule, **caractérisée en ce que** le régulateur (PDR) évalue la vitesse de rotation du rotor (RDZ) du moteur électrique et augmente l'inertie dynamique du rotor si l'évaluation de la vitesse de rotation du rotor (RDZ) indique un état instable du régulateur.

2. Direction assistée pour véhicule selon la revendication 1, **caractérisée en ce que** le moteur électrique est un moteur asynchrone et que le régulateur (PDR) à l'état instable augmente l'inertie dynamique du rotor au moyen d'une commande du moteur asynchrone par orientation du champ.

3. Direction assistée pour véhicule selon la revendication 1, **caractérisée en ce que** le régulateur (PDR) surveille la vitesse du véhicule (vfz) et n'évalue la vitesse de rotation du rotor (RDZ) pour détecter l'état instable que lorsque la vitesse de déplacement ne dépasse pas une première valeur pouvant être prédéfinie (vCD).

4. Direction assistée pour véhicule selon la revendication 1, **caractérisée en ce que** le régulateur (PDR) évalue la vitesse de rotation du rotor (RDZ) en surveillant la variation dans le temps de la vitesse de rotation du rotor et que le régulateur (PDR) détecte l'état instable lorsque la vitesse de rotation du rotor (RDZ) fluctue périodiquement au moins pendant une période pouvant être prédéfinie, fluctue notamment à une fréquence qui se trouve à l'intérieur d'une plage pouvant être prédéfinie.

5. Direction assistée pour véhicule selon la revendication 1, **caractérisée en ce que** le régulateur (PDR) surveille la vitesse du véhicule (vfz) et, à l'état instable du régulateur, n'augmente l'inertie dynamique du rotor que lorsque la vitesse du véhicule (vfz) ne dépasse pas une deuxième valeur pouvant être prédéfinie (vRCS).

6. Direction assistée pour véhicule selon la revendication 1, **caractérisée en ce que** le régulateur (PDR) à l'état instable du régulateur réduit l'inertie dynamique du rotor en appliquant à la commande dynamique du moteur électrique un premier facteur (RTF1) qui possède un signe positif et que le régulateur (PDR), à l'état instable du régulateur, augmente l'inertie dynamique du rotor en appliquant à la commande dynamique du moteur électrique un deuxième facteur (RTF2) qui est inférieur au premier facteur (RTF1) et/ou qui possède un signe négatif.

7. Direction assistée pour véhicule selon la revendication 6, **caractérisée en ce que** le régulateur (PDR) surveille la vitesse du véhicule (vfz) et détermine le facteur négatif (RTF2) au moyen d'une fonction caractéristique (ARK) qui dépend au moins de la vitesse du véhicule (vfz), notamment de la vitesse du véhicule (vfz), de la vitesse de rotation du rotor (RDZ) et d'un changement de signe du couple de direction (LM).

8. Direction assistée pour véhicule selon la revendication 1, **caractérisée en ce que** le régulateur est un régulateur PD (PDR) qui présente au moins un élément proportionnel et au moins un élément différentiel, que le régulateur PD (PDR) commande le moteur électrique au moyen d'une fonction caractéristique (SAKL) prédéfinie par son élément proportionnel et que le régulateur PD(PDR) à l'état instable applique une fonction de filtrage retardée dans le temps (ARF) à la fonction caractéristique (SAKL).

9. Procédé de régulation d'un moteur électrique d'une direction assistée de véhicule avec lequel le moteur électrique est commandé de manière dynamique de manière à ce que celui-ci produise un couple moteur (MSM) d'assistance à la force de changement de direction en plus du couple de direction (LM) appliqué par le conducteur du véhicule, **caractérisé en ce que** la vitesse de rotation du rotor (RDZ) du moteur électrique est évaluée et que l'inertie dynamique du rotor est augmentée si l'évaluation de la vitesse de rotation du rotor (RDZ) indique un état instable du régulateur.

10. Procédé selon la revendication 9, **caractérisé en ce que** le procédé est mis en oeuvre au moyen d'un automate à états qui comprend trois états (100, 200, 300), le premier état (100) étant adopté pour activer ou désactiver la détection de l'état instable du régulateur, le deuxième ou le troisième état (200 ; 300) étant adopté pour effectuer l'évaluation de la vitesse de rotation du rotor (RDZ) afin de détecter l'état instable.

11. Procédé selon la revendication 10, **caractérisé en ce que** la vitesse du véhicule (vfz) est surveillée dans le premier état (100) et que le basculement dans le deuxième ou le troisième état (200 ; 300) en vue de détecter l'état instable s'effectue si la vitesse du véhicule (vfz) dépasse une première valeur pouvant être prédéfinie (vCD), l'accélération positive ou négative du rotor (RB; -RB) étant déterminée à partir de la variation dans le temps de la vitesse de rotation du rotor puis comparée avec une valeur limite de gradient (nACG), le basculement dans le deuxième état (200) ayant lieu si l'accélération positive du rotor (RB) dépasse la valeur limite de gradient (nACG) et le basculement dans le troisième état (300) ayant lieu si l'accélération négative du rotor (-RB) dépasse la valeur limite de gradient (nACG).

12. Procédé selon la revendication 10, **caractérisé en ce que** la vitesse du véhicule (vfz) est surveillée dans le premier état (100) et la détection de l'état instable est désactivée (sCA = 0) si la vitesse du véhicule (vfz) dépasse une deuxième valeur pouvant être prédéfinie (vRCS).

13. Procédé selon la revendication 11, **caractérisé en ce que** dans le deuxième état (200), l'accélération négative du rotor (-RB) est comparée avec la valeur limite de gradient (nAVG) et un contrôle est effectué pour vérifier si cette valeur limite de gradient (nAVG) est dépassée moins souvent qu'un nombre pouvant être prédéfini (zCPC) et, si c'est le cas, il y a basculement dans le premier état (100) pour désactiver la détection de l'état instable (sCA = 1) ou, si ce n'est pas le cas, il y a basculement dans le troisième état (300).

14. Procédé selon la revendication 11, **caractérisé en ce que** dans le troisième état (300), l'accélération positive du rotor (RB) est comparée avec la valeur limite de gradient (nAVG) et un contrôle est effectué pour vérifier si cette valeur limite de gradient (nAVG) est dépassée moins souvent qu'un nombre pouvant être prédéfini (zCPC) et, si c'est le cas, il y a basculement dans le premier état (100) pour désactiver la détection de l'état instable (sCA = 1) ou, si ce n'est pas le cas, il y a basculement dans le deuxième état (200).
